# EUROPEAN PATENT APPLICATION

(11) **EP 2 253 599 A1**
(43) Date of publication of application: **24.11.2010**
(21) Application number: 09721103.1
(22) Date of filing: 04.03.2009
(51) Int. Cl.: C03C 8/02, C03C 8/04, C03C 8/14, H01J 11/02, H01J 29/90

(54) **LEAD-FREE LOW-MELTING-POINT GLASS COMPOSITION HAVING ACID RESISTANCE**

(30) Priority: 13.03.2008 JP 2008064187
(71) Applicant: Central Glass Company, Limited, Yamaguchi 755-0001 (JP)
(72) Inventor: HAMADA, Jun, Mie 515-0001 (JP); TOMINAGA, Koji, Mie 515-0001 (JP); HAYAKAWA, Naoya, Mie 515-0001 (JP)
(74) Representative: Manitz, Finsterwald & Partner GbR
(86) International application number: PCT/JP2009/054038
(87) International publication number: WO 2009/113430

(57) **Abstract**

A lead-free low-melting-point glass having an acid resistance, being substantially free of PbO and including 12 to 35 mass% of SiO₂, 3 to 20 mass% of B₂O₃, 35 to 75 mass% of Bi₂O₃, and 0 to 8 mass% of at least one material selected from the group consisting of Li₂O, Na₂O and K₂O is provided. A lead-free low-melting-point glass composition including a powder of the glass and a filler made of a ceramic powder is also provided.

## Description

### TECHNICAL FIELD

The present invention relates to a low-melting-point glass useable as an electric insulating film material and a sealing material for an electronic material substrate, typically such as a field emission display panel, a plasma display panel, a liquid crystal display panel, an electroluminescence panel, a fluorescence display panel, an electrochromic display panel, a light emitting diode display panel, a gas discharge display panel and the like.

### BACKGROUND OF THE INVENTION

Conventionally, glass has been used as a material for bonding or sealing an electronic part, or a coating material for protecting or insulating electrodes and resistors which are formed in the electronic part. In particular, with the recent progress of techniques for electronic parts, there have been developed various kinds of display panels, for instance, such as a field emission display panel, a plasma display panel, a liquid crystal display panel, an electro luminescence panel, a fluorescence display panel, an electro chromic display panel, a light emitting diode display panel, a gas discharge display panel and the like. Among these display panels, the field emission display panel has been noticed as a thin and large scale flat color display device with high luminance and high definition (for instance, see Patent Literature 1).

Upon producing the field emission display panel, a low-melting-point glass layer as an insulating layer is formed over a surface of the substrate (for instance, a soda-lime glass substrate) on which a cathode electrode is arranged. A gate electrode layer is formed over an entire surface of the glass layer by depositing metal (for instance, Cr or Mo) by a sputtering method, etc. Next, in order to form emitter holes, a photoresist is applied onto a surface of the gate electrode layer, and the resulting coating photoresist film is formed into a predetermined patterned shape. Then, the gate electrode layer is subjected to chemical etching using acid (for instance, nitric acid or the like), so that a predetermined electrode pattern is obtained. Subsequently, a part of the low-melting-point glass layer which is exposed by the chemical etching is etched by acid (for instance, hydrofluoric acid or the like) to thereby form emitter holes. Finally, an emitter (for instance, Cr, Mo, carbon nanotube or the like) is formed on the cathode electrode exposed to outside through the respective emitter holes. Thus, a cathode substrate is obtained.

In the production process of the cathode substrate using the chemical etching as described above, during the pattering of the gate electrode layer, it is important to prevent the low-melting-point glass layer beneath the gate electrode layer from undergoing corrosion by the etchant (for instance, nitric acid or the like) and maintain a high insulating property. That is, it is required that the low-melting-point glass to be used should has a high acid resistance. Further, conventionally, a low-melting-point glass containing a large amount of lead which has an extremely large effect of reducing a melting point of glass has been widely used for these electronic materials (for instance, see Patent Literature 2).

In addition, so-called lead-free glass containing no lead has been proposed (for instance, see Patent Literatures 3 and 4).
Patent Literature 1: Japanese Patent Application Unexamined Publication No. 2006-114494
Patent Literature 2: Japanese Patent Application Unexamined Publication No. 2001-52621
Patent Literature 3: Japanese Patent Application Unexamined Publication No. 2000-219536
Patent Literature 4: Japanese Patent Application Unexamined Publication No. 9-227214

### SUMMARY OF THE INVENTION

The lead-containing glass as described in the above Japanese Patent Application Unexamined Publication No. 2006-114494 has an extremely large effect of reducing a melting point of the glass. However, lead has adverse influence on human body and the environments. Therefore, in recent years, there is a tendency to avoid use of the lead-containing glass. On the other hand, even in lead-free glass for solving this problem of the lead containing glass, for instance, the glass as described in the above Japanese Patent Application Unexamined Publication No. 2000-219536 and the glass as described in Japanese Patent Application Unexamined Publication No. 9-227214 are considerably deteriorated in acid resistance. Therefore, not only the metal gate electrode layer but also the low-melting-point glass layer therebeneath undergo corrosion upon patterning of the metal gate electrode layer by the chemical etching, whereby the function of the low-melting-point glass layer cannot be sufficiently attained. In addition, many kinds of lead-free glasses are generally unstable. In a case where the lead-free glass is treated at a high temperature, the lead-free glass will be crystallized during baking so that the function thereof cannot be sufficiently attained.

Another example of the lead-free glass having a high acid resistance is borosilicate glass containing a large amount of boron. However, since the softening point of the borosilicate glass is 800°C or more, the borosilicate glass cannot be used in a case where the soda-lime glass is used as a substrate.

The present invention was made in view of the above-described problems encountered in the conventional low-melting-point glass and lead-free glass. An object of the present invention is to provide a lead-free low-melting-point glass composition capable of suppressing corrosion that is caused by an etching acid (for instance, nitric acid or the like) used for etching a metal gate electrode in a production process of making an electronic material substrate (such as a field emission display panel) which includes an insulating layer made of the lead-free low-melting-point glass composition.

In one aspect of the present invention, there is provided a lead-free low-melting-point glass having acid resistance which includes 12 to 35 mass% of SiO₂, 3 to 20 mass% of B₂O₃, 35 to 75 mass% of Bi₂O₃, and 0 to 8 mass% of at least one material selected from the group consisting of Li₂O, Na₂O and K₂O.

In a further aspect of the present invention, there is provided a lead-free low-melting-point glass composition which includes a powder of the above-described glass and a filler made of ceramic powder. This lead-free low-melting-point glass composition can be used for, for instance, a field emission display panel, a plasma display panel and an electronic material substrate.

### DETAILED DESCRIPTION OF THE INVENTION

According to the present invention, there is provided a lead-free low-melting-point glass having acid resistance which is used as an insulating glass material for an electronic material substrate, typically such as a field emission display. The glass includes 12 to 35 mass% of SiO₂, 3 to 20 mass% of B₂O₃, 0 to 8 mass% of R₂O (at least one material selected from the group consisting of Li₂O, Na₂O and K₂O), and 35 to 75 mass% of Bi₂O₃, and is substantially free of a lead component.

SiO₂ is a glass forming component which is also an essential component for obtaining a high acid resistance. SiO₂ is allowed to coexist with B₂O₃ as another glass forming component to make a stable glass. The content of SiO₂ in the glass is preferably 12 to 35% (mass%: this is suitably applied to the subsequent description). When the SiO₂ content is greater than 35%, the softening point of the glass may become too high, thereby making formability and workability difficult. When the SiO₂ content is less than 12%, the acid resistance of the glass may be lowered. The SiO₂ content is more preferably 14 to 33%.

B₂O₃ is a glass forming component similar to SiO₂. B₂O₃ makes it easy to melt the glass, suppresses an excessive increase in the thermal expansion coefficient of the glass, and imparts a suitable fluidity to the glass upon baking. Further, B₂O₃ serves to lower the dielectric constant of the glass. The content of B₂O₃ in the glass is preferably 3 to 20%. When the B₂O₃ content in the glass is less than 3%, the fluidity of the glass may become not enough, thereby causing deterioration in the sintering property. When the B₂O₃ content in the glass exceeds 20%, the acid resistance of the glass may become insufficient to thereby lower the stability. The B₂O₃ content in the glass is more preferably 4 to 18%.

R₂O (Li₂O, Na₂O and K₂O) has functions of enhancing a melting property of the glass upon melting the glass, and lowering a softening point of the glass. The content of R₂O in the glass which is at least one material selected from of Li₂O, Na₂O and K₂O is preferably 0 to 8% as a total amount of these materials. When the R₂O content in the glass exceeds 8%, the acid resistance of the glass may become insufficient to thereby cause an excessive increase in the thermal expansion coefficient of the glass. The R₂O content in the glass is more preferably 0 to 6%.

Bi₂O₃ has functions of lowering a softening point of the glass, imparting a suitable fluidity to the glass and adjusting a thermal expansion coefficient of the glass to a suitable range. The content of Bi₂O₃ in the glass is preferably 35 to 75%. When the Bi₂O₃ content in the glass is less than 35%, these functions cannot be attained. When the Bi₂O₃ content in the glass exceeds 75%, the acid resistance of the glass may become insufficient and the thermal expansion coefficient of the glass may become too high. The Bi₂O₃ content in the glass is more preferably 40 to 70%.

Further, the glass may contain ZnO. ZnO has functions of lowering a softening point of the glass, imparting a suitable fluidity to the glass and adjusting a thermal expansion coefficient of the glass to a suitable range. The content of ZnO in the glass is preferably 0 to 12. When the ZnO content in the glass exceeds 12%, the glass may become unstable so that devitrification of the glass tends to occur. The ZnO content in the glass is more preferably 1 to 10%.

The glass may contain ZrO₂ which has a function of enhancing a acid resistance of the glass. The content of ZrO₂ in the glass is preferably 0 to 5%. When the ZrO₂ content in the glass exceeds 5%, the glass may become unstable so that devitrification of the glass tends to occur. The ZrO₂ content in the glass is more preferably 0 to 3%.

Further, in order to enhance an acid resistance of the glass, the glass may also contain RO (MgO, CaO, SrO and BaO), Al₂O₃, Nb₂O₅, TiO₂, La₂O₃ and the like in such an amount as not to deteriorate the functions as described above.

In addition, the glass may further contain CuO, MnO₂, In₂O₃, CeO₂, SnO₂ and TeO₂ as general oxides in such an amount as not to deteriorate the functions as described above.

The glass according to the present invention is substantially free of PbO, so that adverse influences of the glass on human body and the environments can be eliminated. The term "substantially free of PbO" means that the glass contains PbO in an amount as small as impurities. If the content of PbO in the low-melting-point glass is not more than 0.3%, the above-mentioned problem, that is, adverse influence on human body and the environments and on insulating property can be kept negligible, so that the glass can be substantially inhibited from suffering from the adverse influence of PbO.

The above-described glass according to the present invention may be a lead-free low-melting-point glass that has a thermal expansion coefficient of from 65x10⁻⁷/°C to 95x10⁻⁷/°C as measured at a temperature of from 30°C to 300°C and a softening point of from 500°C to 600°C. If the thermal expansion coefficient is out of the above specified range, there may occur problems such as exfoliation of the insulating film of the lead-free low-melting-point glass or warpage of the substrate upon forming and bonding or sealing the insulating film of the lead-free low-melting-point glass. The thermal expansion coefficient of the lead-free low-melting-point glass is preferably from 70x10⁻⁷/°C to 85x10⁻⁷/°C. Further, if the softening point exceeds 600°C, there may occur softening deformation of the substrate. The softening point of the lead-free low-melting-point glass is preferably from 510°C to 590°C.

Furthermore, according to the present invention, there is provided a lead-free low-melting-point glass composition which includes a powder of the above-described glass and a filler made of a ceramic powder. when the ceramic powder as the filler is added to the glass powder, it is possible to provide a lead-free low-melting-point glass composition which is further enhanced in acid resistance.

In this description, the term "filler" means a powder of microcrystalline and polycrystalline particles which is mixed in the glass and remains in the particulate state in the finally obtained glass film without being melted.

The mixing ratio of the filler made of ceramic powder to the glass powder may vary in a wide range. However, if the mixing ratio of the filler to the glass powder is less than 1%, the effect of addition of the filler tends to be insufficient. If the mixing ratio of the filler to the glass powder exceeds 40%, the sintering property of the glass may be deteriorated to thereby cause exfoliation of the glass film from the substrate. For this reason, the mixing ratio of the filler to the glass powder is preferably in the range of 1 to 40%, and more preferably in the range of 4 to 35%. That is, the mixing ratio of the glass powder to the filler is preferably in the range of 60 to 99%, and more preferably in the range of 65 to 96%. Inorganic fillers such as Al₂O₃, ZrO₂ and TiO₂ may be used as the ceramic powder.

The lead-free low-melting-point glass according to the present invention may be used in the form of a powder. Generally, the powder of the lead-free low-melting-point glass may be admixed with an organic vehicle (for instance, a solution of ethyl cellulose in α-terpineol) to form a paste.

The glass substrate to be covered by the lead-free low-melting-point glass, may be a transparent glass substrate, such as a soda-lime-silica glass or a similar glass (high strain point glass) or an alumino-lime-borosilicate glass which contains a less amount of an alkali component (or substantially no alkali component).

Furthermore, the lead-free low-melting-point glass according to the present invention has high acid resistance and can be therefore suitably used as a white dielectric layer for PDP in which ribs are formed by chemical etching, an insulating layer of a fluorescent display tube and other various kinds of electronic material substrates.

### [Examples and Comparative Examples]

The present invention will be explained hereinafter with reference to the following examples. However, the following examples are only illustrative and not intended to limit the invention thereto.

### (Preparation of Low-melting-point Glass Mixed Paste)

A fine silica sand powder, boric acid, zinc white, bismuth oxide, aluminum oxide, lithium carbonate, potassium carbonate, sodium carbonate, zirconia, barium carbonate, calcium carbonate and strontium carbonate were respectively used as raw materials of SiO₂, B₂O₃, ZnO, Bi₂O₃, Al₂O₃, Li₂O, K₂O, Na₂O, ZrO₂, BaO, CaO and SrO of the glass composition. These raw materials were compounded together so as to obtain a desired low-melting-point glass composition. The resulting mixture was charged into a platinum crucible and then heated and melted in an electric furnace at a temperature of 1000 to 1300°C for 1 to 2 hours, thereby obtaining glass compositions of Examples 1 to 8 as shown in Table 1 and glass compositions of Comparative Examples 1 to 6 as shown in Table 2.

**Table 1**

| Examples | | 1 | 2 | 3 | 4 | 5 | 6 | 7 | 8 |
|---|---|---|---|---|---|---|---|---|---|
| Glass composition (mass%) | SiO₂ | 14.3 | 20.0 | 28.6 | 33.9 | 25.8 | 17.5 | 15.9 | 27.0 |
| | B₂O₃ | 4.2 | 7.7 | 11.9 | 12.6 | 18.8 | 6.8 | 6.2 | 15.4 |
| | Al₂O₃ | | | | 0.6 | 1.0 | | 1.5 | |
| | ZnO | 2.2 | 9.1 | 10.8 | | | 5.3 | | 9.1 |
| | Bi₂O₃ | 73.5 | 51.8 | 37.2 | 43.5 | 46.4 | 60.5 | 68.6 | 44.5 |
| | MgO | | | 2.0 | | | 2.0 | | |
| | CaO | 1.1 | | | | 1.3 | | | |
| | SrO | | 2.1 | 1.0 | | | | | |
| | BaO | 3.5 | 7.8 | | | | 6.4 | 4.5 | |
| | Li₂O | | | | | 1.2 | | | 0.6 |
| | Na₂O | | | 2.0 | 7.5 | 4.2 | | | 1.1 |
| | K₂O | | | 2.5 | | | | | 1.2 |
| | ZrO₂ | | | 4.0 | | 1.3 | 1.5 | 2.3 | 1.1 |
| | Nb₂O₅ | | 1.5 | | | | | 1.0 | |
| | TiO₂ | | | | 1.9 | | | | |
| | La₂O₃ | 1.2 | | | | | | | |
| | Ceramic filler | | | | | | Al₂O₃ | TiO₂ | ZrO₂ |
| Mixture ratio | glass/filler | | | | | | 95/5 | 85/15 | 70/30 |
| Vitrification | | ○ | ○ | ○ | ○ | ○ | ○ | ○ | ○ |
| Thermal expansion coefficient ×10⁻⁷/°C | | 87 | 75 | 77 | 79 | 80 | 77 | 78 | 76 |
| Softening point °C | | 515 | 585 | 579 | 590 | 562 | 545 | 540 | 543 |
| Acid resistance | | ○ | ○ | ○ | ○ | ○ | ○ | ○ | ○ |

**Table 2**

| Comparative Examples | | 1 | 2 | 3 | 4 | 5 | 6 |
|---|---|---|---|---|---|---|---|
| Glass composition (mass%) | SiO₂ | 11.2 | 16.4 | 37.2 | 10.5 | 21.2 | 4.5 |
| | B₂O₃ | 5.0 | 2.5 | 12.6 | 21.6 | 21.0 | 21.8 |
| | Al₂O₃ | 0.3 | | | 2.5 | | |
| | ZnO | 13.1 | | | | | 14.0 |
| | Bi₂O₃ | 66.7 | 80.1 | 33.9 | 58.8 | 43.2 | 50.5 |
| | MgO | | 1.0 | | | | 2.1 |
| | CaO | | | 5.0 | | 4.3 | |
| | SrO | | | 3.0 | | | |
| | BaO | 3.7 | | 2.2 | 6.6 | | 7.1 |
| | Li₂O | | | | | 1.2 | |
| | Na₂O | | | 4.2 | | 4.2 | |
| | K₂O | | | | | 3.6 | |
| | ZrO₂ | | | | | 1.3 | |
| | Nb₂O₅ | | | | | | |
| | TiO₂ | | | 1.9 | | | |
| | La₂O₃ | | | | | | |
| | Ceramic filler | | | | | | Al₂O₃ |
| Mixture 50/50 ratio | glass/filler | | | | | | |
| Vitrification | | ○ | × | ○ | ○ | ○ | ○ |
| Thermal expansion coefficient ×10⁻⁷/°C | | 82 | - | 68 | 78 | 93 | 76 |
| Softening point °C | | 535 | - | 620 | 570 | 524 | 570 |
| Acid resistance | | × | - | - | × | - | - |
| Remarks | | Acid resistance NG | Non-vitrifiable | Softening point High | Acid resistance NG | α High | Film exfoliation |

A part of the obtained glass composition was poured into a mold and formed into a glass block. The glass block was used for the measurement of thermal properties (thermal expansion coefficient and softening point) thereof. The remainder of the obtained glass composition was formed into flakes by a quenching dual-roller forming machine, and then formed into a glass powder having an average particle size of 1 to 3 µm and a maximum particle size of less than 15 µm by a crushing machine.

Subsequently, the obtained glass powder and a binder (ethyl cellulose) were mixed with a paste oil composed of α-terpineol and butyl carbitolacetate, thereby obtaining a paste having a viscosity of about 300±50 poises. Further, as shown in Table 1 and Table 2, in Examples 6 to 8 and Comparative Example 6, the thus obtained glass paste was mixed with a ceramic filler to prepare a ceramic filler-containing paste.

The prepared paste was applied onto a soda-lime glass substrate having a thickness of 2 to 3 mm and a size of a 100 mm square by means of an applicator so as to form a coat layer having a post-baking thickness of about 20 µm on the substrate. Subsequently, after drying, the coat layer formed on the substrate was baked at a temperature of 550 to 580°C for 30 minutes, thereby forming an insulating film on the substrate.

The acid resistance of the thus formed insulating film was evaluated by immersing the film in 7 mol% nitric acid aqueous solution for 10 minutes and observing the film using a microscope. The insulating film whose surface was free from deterioration was judged as "OK" and the insulating film whose surface was deteriorated was judged as "NG".

Meanwhile, the softening point of the insulating film was measured using a Lyttelton viscometer. The temperature at which viscosity coefficient (η) reached 10^{7.6} was measured as the softening point. Further, the thermal expansion coefficient of the insulating film was calculated from an elongation amount thereof which was measured by a thermal expansion tester when the temperature was increased at a rate of 5°C per minute within a range of 30 to 300°C.

### (Test Results)

The glass compositions and the test results are shown in Tables 1 to 2.

As shown in Examples 1 to 8 in Table 1, the glass compositions which fall in the range according to the present invention have a softening point within a range from 500°C to 600°C, a suitable thermal expansion coefficient within a range from 65x10⁻⁷/°C to 95x10⁻⁷/°C, and a good acid resistance. The glass compositions according to the present invention is suitably used as an insulating glass material for a field emission display panel and a glass for a white dielectric layer for PDP.

In contrast, as shown in Comparative Examples 1 to 6 in Table 2, the glass compositions which are out of the range according to the present invention have a low acid resistance or fail to exhibit suitable physical properties. Therefore, the glass compositions of Comparative Examples 1 to 6 are inapplicable to an insulating glass material for a field emission display panel and a glass for a white dielectric layer for PDP.

## Claims

1. A lead-free low-melting-point glass having an acid resistance, comprising: 12 to 35 mass% of SiO₂, 3 to 20 mass% of B₂O₃, 35 to 75 mass% of Bi₂O₃, and 0 to 8 mass% of at least one material selected from the group consisting of Li₂O, Na₂O and K₂O.

2. The lead-free low-melting-point glass having an acid resistance as claimed in claim 1, further comprising 0 to 12 mass% of ZnO.

3. The lead-free low-melting-point glass having an acid resistance as claimed in claim 1 or 2, further comprising 0 to 5 mass% of ZrO₂.

4. A lead-free low-melting-point glass composition comprising: a powder of said glass as claimed in any one of claims 1 to 3, and a filler made of a ceramic powder.

5. The lead-free low-melting-point glass composition as claimed in claim 4, wherein said powder of the glass is present in a range of 60 to 99 mass% and said filler made of the ceramic powder is present in a range of 1 to 40 mass%.

6. The lead-free low-melting-point glass composition as claimed in claim 4 or 5, wherein said glass composition has a thermal expansion coefficient ranging from 65x10⁻⁷/°C to 95x10⁻⁷/°C as measured at a temperature ranging from 30°C to 300°C, and a softening point ranging from 500°C to 600°C.

7. A field emission display panel using said lead-free low-melting-point glass composition as claimed in any one of claims 4 to 6.

8. A plasma display panel using said lead-free low-melting-point glass composition as claimed in any one of claims 4 to 6.

9. An electronic material substrate using said lead-free low-melting-point glass composition as claimed in any one of claims 4 to 6.
